# EUROPEAN PATENT APPLICATION

(11) **EP 0 626 670 A1**
(43) Date of publication of application: **30.11.1994**
(21) Application number: 94201470.5
(22) Date of filing: 25.05.1994
(51) Int. Cl.: G09G 1/20

(54) **Selection driver comprising integrated driver circuits for a multi-beam flat display device**

(30) Priority: 28.05.1993 EP 93201537; 01.03.1994 EP 94200516
(71) Applicant: PHILIPS ELECTRONICS N.V., 5621 BA Eindhoven (NL)
(72) Inventor: Van Amesfoort, Alfonsus Maria, NL-5656 AA Eindhoven (NL); Fronen, Robert Jan, NL-5656 AA Eindhoven (NL); McCormack, James Joseph Antony, NL-5656 AA Eindhoven (NL); Oostveen, Kornelis, NL-5656 AA Eindhoven (NL); Schoofs, Franciscus Adrianus Cornelis Maria, NL-5656 AA Eindhoven (NL)
(74) Representative: Kooiman, Josephus Johannes Antonius

(57) **Abstract**

Picture display device comprising a plurality of electron transport ducts for transporting the electrons in the form of electron currents, and selection electrodes for withdrawing each electron current at predetermined locations from its transport duct and for directing said current towards a luminescent screen. The selection electrodes are driven by a selection driver comprising a resistance ladder for supplying a bias (transport) voltage increasing with the position of the selection electrodes, and coupling capacitors for applying selection pulses to the selection electrodes.

To enable the coupling capacitors to withstand voltages which are not too large, the selection driver comprises integrated driver circuits which are cascaded as regards their power supply voltages.

## Description

The invention relates to a picture display device having a selection structure for controlling the passage of electrons *via* extraction locations which communicate row by row with electron transport ducts and with selection electrodes associated with the extraction locations, which selection electrodes are coupled to a selection driver comprising a resistance ladder for applying, to the selection electrodes, a bias voltage increasing with the position across the length of the transport ducts, and coupling capacitors for applying selection pulses to the selection electrodes.

A picture display device of this type is described in European Patent Application no. 92204007.6 (PHN 13.963) and may comprise a display unit of the flat-panel type as disclosed in European Patent Applications EP-A 0 400 750 and EP-A 0 436 997. Display units of the flat-panel type are constructions having a transparent face plate and, arranged at a small distance therefrom, a rear plate, which plates are interconnected by means of partitions and in which the inner side of the face plate is provided with pixels in the form of a phosphor pattern, one side of which is provided with an electrically conducting coating (the combination also being referred to as luminescent screen). If (video information-controlled) electrons impinge upon the luminescent screen, a visual image is formed which is visible *via* the front side of the face plate. The face plate may be flat, or if desired, curved (for example, spherical or cylindrical).

The display unit described in European Patent Applications EP-A 0 400 750 and EP-A 0 436 997 comprises a plurality of juxtaposed sources for emitting electrons, local electron transport ducts cooperating with the sources and each having walls of high-ohmic, electrically substantially insulating material having a secondary emission coefficient suitable for transporting emitted electrons in the form of electron currents and a selection structure comprising selectively energizable electrodes (selection electrodes) for withdrawing each electron current from its transport duct at predetermined extraction locations facing the luminescent screen, while further means are provided for directing extracted electrons towards pixels of the luminescent screen for producing a picture composed of pixels.

The operation of this known display unit is based on the recognition that electron transport is possible when electrons impinge on an inner wall of an elongate evacuated cavity (referred to as "compartment") defined by walls of a high-ohmic, electrically substantially insulating material (for example, glass or synthetic material), if an electric field of sufficient power is generated in the longitudinal direction of the (compartment) (by applying an electric potential difference across the ends of the "compartment"). The impinging electrons then generate secondary electrons by wall interaction, which electrons are attracted to a further wall section and in their turn generate secondary electrons again by wall interaction. The circumstances (field strength E, electrical resistance of the walls, secondary emission coefficient δ of the walls) may be chosen to be such that a substantially constant vacuum current will flow in the "compartment".

Starting from the above-mentioned principle, a flat-panel picture display unit can be realised by providing each one of a plurality of juxtaposed "compartments" which constitute transport ducts, with a column of extraction apertures at a side which is to face a display screen. It will then be practical to arrange the extraction apertures of adjacent transport ducts along parallel lines extending transversely to the transport ducts. By associating selection electrodes arranged in rows with the arrangement of apertures, which selection electrodes are energizable by means of a first (positive) electric voltage (pulse) for withdrawing electron currents from the "compartments" *via* the apertures of a row, or which convey a second (lower) electric voltage if no electrons are to be locally withdrawn from the "compartments", an addressing means is provided with which electrons withdrawn from the "compartments" can be directed towards the screen for producing an image composed of pixels by activating the pixels.

Together with said pulses, a bias voltage or transport voltage (= the above-mentioned second electric voltage) increasing with the position in the transport ducts is to be applied to the selection electrodes so as to realise the transport of electrons in the transport ducts. In practice, this transport voltage may be approximately 100 V/cm so that a total transport voltage of 3 kV is required for a fiat-panel display unit having a height of, for example 30 cm (with one cathode at one side of the panel).

The resistors for said resistance ladder can be made in a relatively simple way and at low cost and may be integrated in the display. This is much less the case for the coupling capacitors. Said bias voltage (transport voltage) will be applied across the coupling capacitors and the required insulation voltages are of the order of several kV, so that low-cost integrated capacitors are not possible.

It is an object of the invention to obviate the drawback of the large insulation voltages across the coupling capacitors. To this end the picture display device according to the invention is characterized in that the selection driver comprises a multiple of integrated driver circuits for supplying the selection pulses, each integrated driver circuit having a plurality of outputs each supplying selection pulses *via* one of the coupling capacitors, said integrated driver circuits being cascaded as regards their power supply voltages originating from a power supply voltage divider.

In accordance with a further aspect of the invention such a picture display device is characterized in that each integrated driver circuit has a first power supply terminal (-) for connection to a first power supply voltage of the power supply voltage divider and a second power supply terminal (+) for connection to a second power supply voltage originating from the power supply voltage divider and being larger than the first power supply voltage, and in that the first power supply voltage for an integrated driver circuit located at a lower position in the cascade is smaller than the first power supply voltage for the integrated driver circuit which is next higher in the cascade.

To achieve that the maximum DC voltage across the coupling capacitors is substantially equal for all integrated driver circuits, the picture display device in accordance with a further aspect of the invention is characterized in that the voltage difference between the first power supply voltage of an integrated driver circuit located at a lower position in the cascade and the first power supply voltage of the integrated driver circuit which is next higher in the cascade is substantially equal to the bias voltage present across the total resistance ladder, divided by the number of cascaded integrated driver circuits.

The power dissipation of the circuit can be considerably reduced if, in accordance with a further feature of the invention, said power supply terminals of the integrated driver circuits are decoupled for alternating current by means of decoupling capacitors.

To reduce a disturbing variation of the height of the selection pulses, which variation is caused by non-linearity of the coupling capacitors and is dependent on the position of the selection electrode, and to obtain a further reduction of the maximum DC voltage across the coupling capacitors, a picture display device according to the invention may be further characterized in that the power supply voltages of the integrated driver circuits are adjusted in such a way with respect to the bias voltages generated by the resistance ladder that the first power supply voltage of the integrated driver circuits is substantially halfway between the lowest and the highest bias voltage of the selection electrodes driven by the relevant driver circuit.

To reduce the detrimental effects of the tolerances of the ladder resistors to a considerable extent, a picture display device according to the invention may be further characterized by DC connections which interconnect junction points of the power supply voltage divider and junction points of the resistance ladder which have a mutually corresponding nominal DC voltage.

A further embodiment of a picture display device according to the invention is characterized in that the integrated driver circuits have a control signal input for supplying control signals which control the instant of occurrence of the selection pulses at the outputs of the integrated driver circuit, while the integrated driver circuits are preferably cascaded as regards the control signals and have control signal outputs for supplying delayed and DC-offset control signals to the control signal input of an integrated driver circuit which is next in the cascade.

The invention also relates to a selection driver for use in such a picture display device and to an integrated driver circuit for use in such a picture display device.

These and other aspects will be apparent from and elucidated with reference to the embodiments to be described hereinafter.

In the drawings
Fig. 1A is a diagrammatic perspective elevational view, partly broken away, of a display unit as can be used in a display device according to the invention,
Fig. 1B is a cross-section through a display unit of Fig. 1A,
Fig. 2A is a diagrammatic perspective elevational view, partly broken away, of a display unit as can also be used in a picture display device, which display unit has a preselection and a fine selection,
Fig. 2B is a cross-section through the display unit of Fig. 2A,
Fig. 3 shows block-diagrammatically an embodiment of a picture display device according to the invention,
Fig. 4 shows a first embodiment of a selection driver for use in a picture display device according to the invention,
Fig. 5 shows a first embodiment of an integrated driver circuit for use in a picture display device according to the invention,
Fig. 6 shows some modifications for coupling the cascaded driver circuits to the power supply voltage divider,
Fig. 7 shows a second embodiment of a selection driver for use in a picture display device according to the invention,
Fig. 8 shows a second embodiment of an integrated driver circuit for use in a picture display device according to the invention, and
Fig. 9 shows a third embodiment of a selection driver for use in a picture display device according to the invention.

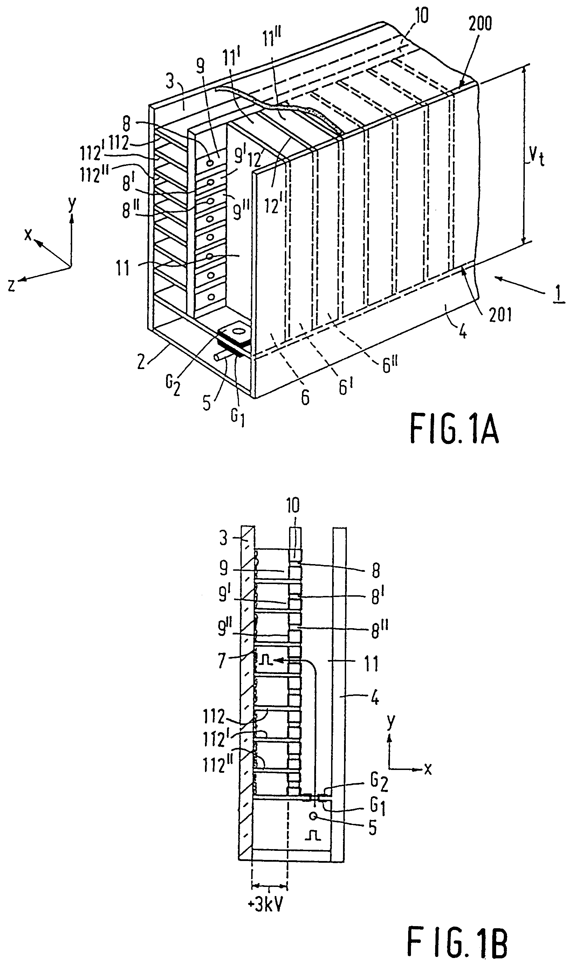

Figs. 1A and 1B shows a flat-panel display unit 1 of a picture display device according to the invention, having a display panel (window) 3 comprising a transparent face plate and a luminescent screen and a rear wall 4 located opposite said panel. A luminescent screen 7 having a repetitive pattern (rows or dots) of, for example triplets of red (R), green (G) and blue (B) luminescing phosphor elements (or monochrome elements) is arranged on the inner surface of window 3. To be able to supply the required high voltage, the luminescent screen 7 is either arranged on a transparent, electrically conducting layer (for example, indium-tin oxide) or is provided with an electrically conducting layer (for example, A1 backing). In a preferred embodiment the (dot-shaped) phosphor elements of a triplet are located at the vertices of a substantial isosceles/equilateral triangle.

An electron source arrangement 5, for example a line cathode which by means of drive electrodes provides a large number (for example, several hundred) of electron emitters or a similar number of separate emitters, is arranged proximate to a bottom plate 2 which interconnects display panel 3 and rear wall 4. Each of these emitters is to provide a relatively small current so that many types of cathodes (cold or hot cathodes) are suitable as emitters. They may have a constant emission (at pulse width modulation) or a controllable emission (at amplitude modulation). The electron source arrangement 5 is arranged opposite entrance apertures of a row of electron transport ducts extending substantially parallel to the screen, which ducts are constituted by compartments 6, 6', 6'', ... *etc*., in this case one compartment for each electron source. These compartments have cavities 11, 11', 11'', ... defined by the rear wall 4 and partitions 12, 12', 12'', ... At least one wall (preferably the rear wall) of each compartment is made of a material which has a suitable high electrical resistance in the longitudinal direction of the compartments for the purpose of the invention (for example, ceramic material, glass, synthetic material - coated or uncoated -) and which have a secondary emission coefficient δ > 1 over a given range of primary electron energies. It is alternatively possible to construct (for example, the rear wall) from "isles" insulated from each other (in the longitudinal direction of the compartments) so as to obtain the desired high electrical resistance in the transport direction.

The electrical resistance of the wall material has such a value in the transport direction that a minimum possible total amount of current (preferably less than, 10 mA) will flow in the walls in the case of a field strength in the axial direction in the compartments of the order of one hundred to several hundred volts per cm required for the electron transport. A voltage Vt which generates the field strength required for the transport is present in operation between an upper rim 200 and a lower rim 201 of the rear wall 4. By applying a voltage of the order of several dozen to several hundred volts (value of the voltage is dependent on circumstances) between the row 5 of the electron sources and grids G1, G2 arranged at inputs of the compartments 6, 6', 6'', ..., electrons are introduced from the electron sources into the compartments. These electrons are accelerated by said field strength, whereafter they impinge upon the walls in the compartments and generate secondary electrons. The electrons can be withdrawn, for example row by row from the compartments *via* apertures 8, 8', ... in a selection plate 10 energized by means of electrodes 9, 9', ... (see Fig. 1A), and accelerated towards the luminescent screen 7 by means of an acceleration voltage applied in operation between the selection plate and the luminescent screen. Horizontal partitions 112, 112', 112'', ... are arranged between the display panel 3 and the selection plate 10. Instead of the partitions shown, it is alternatively possible to use apertured plates.

The display unit utilizes the aspect disclosed in European Patent Applications EP-A 0 400 750 and EP-A 0 436 997 that vacuum electron transport by means of secondary emission (hopping) within compartments having walls of electrically insulating material is possible if an electric field (E_{y}) of sufficient power is applied in the longitudinal direction of the compartment. The contents of European Patent Applications EP-A 0 400 750 and EP-A 0 436 997 are herein incorporated by reference.

Figs. 1A and 1B show the principle of a display unit operating with single selection (as described hereinbefore).

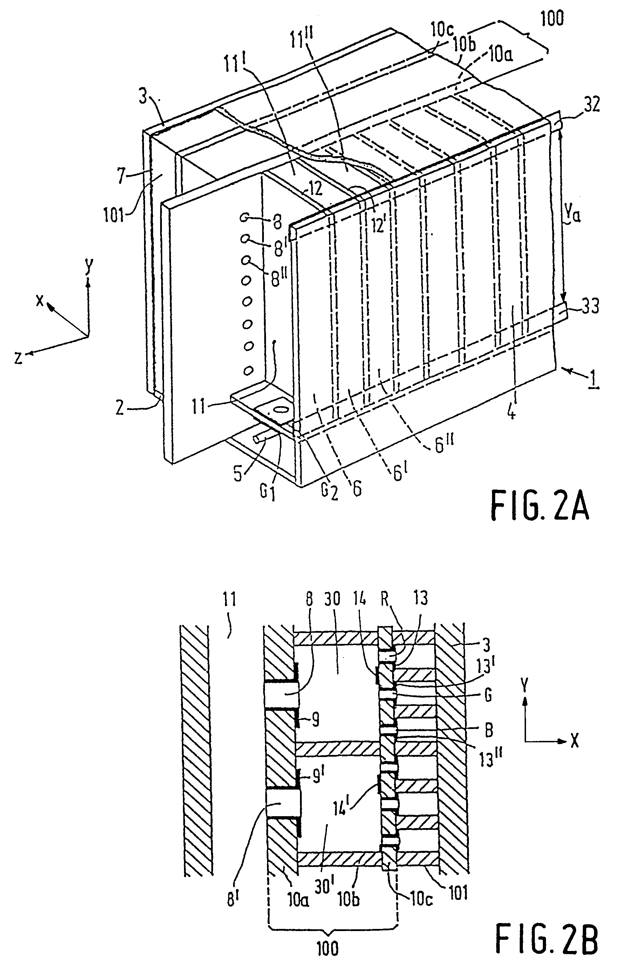

Figs. 2A and 2B show the principle of stepped selection. Stepped selection is herein understood to mean that the selection from the compartments 6, 6', 6'', ... to the luminescent screen 7 is realised in at least two steps. A first (coarse) step for selecting, for example the pixels and a second (fine) step for selecting, for example the colour pixels. The space between the compartments and the luminescent screen 7, which is arranged on the inner wall of the display panel 3, accommodates an active colour selection system 100 which comprises an (active) preselection plate 10a, a spacer plate 10b and an (active) (fine-)selection plate 10c. Structure 100 is separated from the luminescent screen 7 by a flu-spacer structure 101, for example an apertured electrically insulating plate.

Fig. 2B shows in a diagrammatical cross-section a part of the picture display device of Fig. 2A in greater detall, particularly the active colour selection plate structure 100 which comprises a preselection plate 10a with extraction apertures 8, 8', 8'', ... and a fine-selection plate 10c with groups of apertures R, G, B. The apertures R, G, B are generally positioned in a triangle, but for the sake of clarity all three of them have been shown in the cross-section in Fig. 2B. Each extraction aperture 8, 8', *etc*. is associated with three fine-selection apertures R, G, B in this case. Other numbers are alternatively possible, for example 6 fine-selection apertures for each preselection aperture, *etc*. An intermediate spacer structure 10b is arranged between the preselection plate 10a and the fine-selection plate 10c. This structure accommodates communication ducts 30, 30', 30'', ... having a cross-section which is chosen to suit the shape of the phosphor colour pixels (for example, circular or triangular triplets).

The electron transport ducts 6, 6', 6'', ... are formed between the structure 100 and the rear wall 4. To be able to extract the electrons from the transport ducts 6, 6', 6'', ... *via* the apertures 8, 8', 8'', ..., pierced metal preselection electrodes 9, 9' 9'', ... are arranged on the screen-sided surface of the plate 10a.

The walls of the apertures 8, 8', ... are preferably metallized completely or partly, but there is preferably no or little electrode metal on the surface of plate 10a on the side where the electrons land. This is done to ensure that no electrons remain on a selection electrode during addressing (*i.e.* the electrode must draw a minimal current).

Another solution to the problem of drawing current is to ensure that there is electrode metal on the selection surface where the electrons land, but this metal should be given such a large secondary emission coefficient that the preselection electrodes do not draw any net current.

Similarly as the plate 10a, the screen-sided surface of the apertured fine-selection plate 10c is provided with (fine-)selection electrodes 13, 13', ... for realising, for example colour selection. Here again the apertures are preferably metallized completely or partly. The possibility of electrically interconnecting fine-selection electrodes is important in this respect. In fact, a preselection for each pixel has already taken place and, in principle, electrons cannot land at the wrong location (on the wrong pixel in this example). This means that, in principle, only one group or a small number of groups of three separate fine-selection electrodes is required for this form of fine selection. For example, the drive is effected as follows, but there are also other possibilities. The preselection electrodes are brought to a potential substantially linearly increasing with the distance to the electron source arrangement 5, for example, by means of a suitable resistance ladder.

One or more picture lines are selected by applying a positive voltage pulse of, for example 250 V to the desired preselection electrodes used for selecting these picture lines. Colour pixels are addressed by applying shorter pulses having an amplitude of, for example 350 V to the fine-selection electrodes. The fine-selection electrodes preferably have such an electrical resistance, or are connected to external resistors in such a way that they safeguard the electronic circuits (controlling the drive) against breakdown from the luminescent screen.

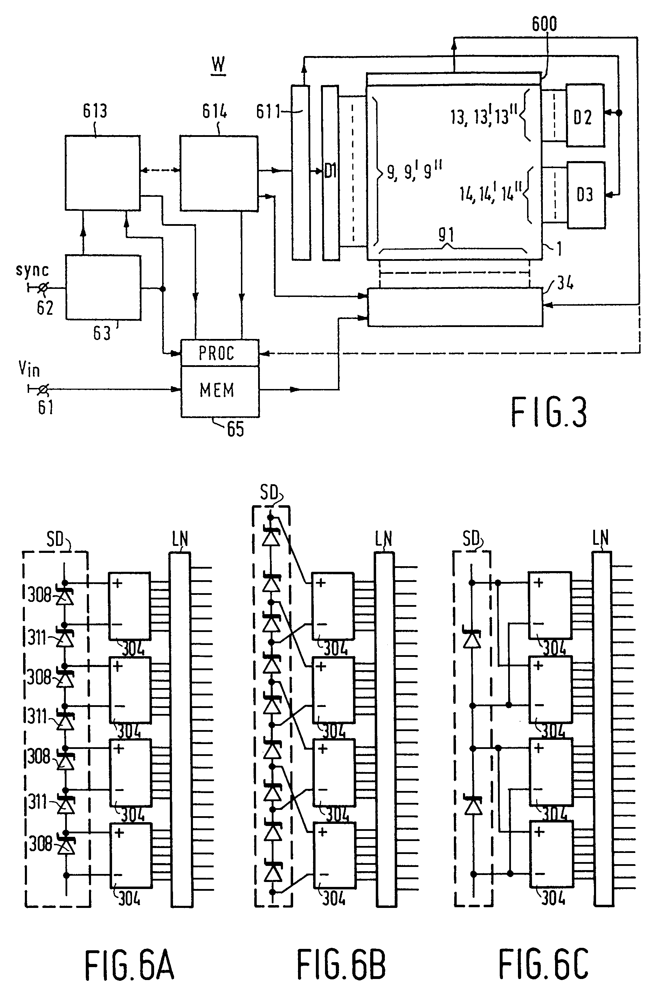

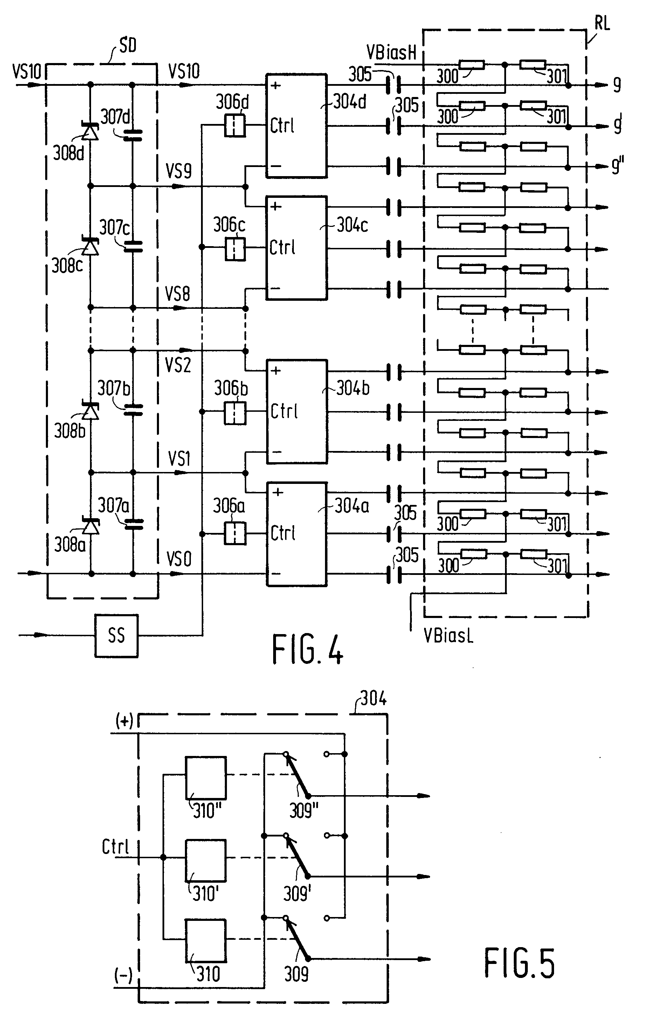

Fig. 3 shows a picture display device W according to the invention. The display device receives an input video signal Vin at an input 61. The input video signal Vin is applied to a video signal processing circuit 65. The display device receives a synchronizing signal sync at an input 62. The input 62 is connected to a synchronization processing circuit 63. This synchronization processing circuit supplies synchronizing signals to a clock generator 613 and defines the television standard of the incoming video signal. The incoming video signal may comprise, for example, Y, U, V signals (or R,G,B signals). If the incoming video signal comprises Y, U, V signals, a conversion to R, G, B signals will have to take place in the video signal processing circuit 65 so that ultimately the different phosphors (red, green and blue) can be driven on the display panel 3. This conversion of Y, U, V signals to R, G, B signals may be effected by means of a matrix circuit. It is possible to carry out this conversion before the video signal is written into the memory MEM, or when the video signal is read from the memory MEM. The video signal is stored, for example, line-sequentially in the video signal processing circuit 65 under the control of a write clock which is generated, for example, by the clock generator 613. The video signal is supplied line by line (for example, for each colour line (R, G, B) in the case of a colour display screen) at an output of the video signal processing circuit under the control of a read clock which is generated by a clock generator 614 and is applied to the video drive circuit 34. In this video drive circuit the video information of, for example a (colour) line is written under the control of the clock generator 614 and subsequently applied in parallel to the G1 (or G2) electrodes which are arranged at the inputs of the compartments 6, 6', 6'', ... (see Fig. 1) of the display unit 1, after which the video information is displayed on the display panel 3. The lines are selected by means of a selection controller 611. This controller is controlled by a clock signal from the clock generator 614. After each clock pulse the selection driver D1 applies new drive voltages to the selection electrodes 9, 9', 9'', ... (see also Fig. 1A) under the control of the selection controller 611. If the picture display device comprises a stepped selection, the selection controller 611 also drives a driver for the fine selection D2. This fine-selection driver D2 is then coupled to the fine-selection electrodes 13, 13', 13'', ... If the picture display device comprises dummy electrodes 14, 14', 14'', ... (to enhance the contrast), the selection controller 611 will also drive a dummy electrode driver D3. This dummy electrode driver drives the dummy electrodes 14, 14', 14'', ... The selection controller receives the information about the drive voltages, for example from a look-up table or from an EPROM. The display unit 1 has a structure as described hereinbefore (see Fig. 1, 1A).

The synchronization processing circuit 63 defines the line frequency, the field frequency and, if the display device is suitable for displaying video signals of different TV standards and/or different aspect ratios, for example also the TV standard and the aspect ratio with reference to the incoming video signal.

The selection electrodes 9, 9', 9'', ... must be driven by means of suitable voltages. These voltages may be subdivided into an AC component and a DC component. The AC component is the selection pulse, the DC component is the bias voltage. Successive preselection electrodes have a bias voltage which increases with their position across the length of the transport ducts. All fine-selection electrodes convey the same bias voltage and so do the dummy electrodes. The pulses can be generated by a device which supplies selection pulses of a constant height and at an equal level (for example, pulses from 0 to 300 V), which selection pulses are coupled in *via* coupling capacitors, while the bias voltage is derived from an extra power supply of, for example 3 kV by means of an resistance ladder. The resistance ladder may be implemented with separate components, integrated components or as a resistance layer and is preferably integrated in the display. However, it is not such a simple matter for the coupling capacitors: the required insulation voltages are of the order of several kV so that integrated capacitors cannot be used. Moreover, the coupling capacitors have a comparatively large value of the order of several nF, and hence they are expensive.

It is feasible to adapt the type of coupling capacitor to the bias voltage which is really required, hence coupling capacitors having a lower insulation voltage are required for the outputs whose required bias voltage does not differ very much from ground level. Coupling capacitors having the full bias voltage are required only for outputs conveying the highest bias voltage. However, it is a drawback that different types of capacitors must be used, which has a cost-raising effect.

Fig. 4 shows a preselection driver D1 according to the invention in which the plurality of ICs is used which are cascaded as regards the power supply voltage.

The circuit of Fig. 4 comprises a resistance ladder RL of resistors 300 which are arranged in series between a high bias voltage V_{biasH} of, for example 3 kV and a low bias voltage V_{biasL} of, for example 0 V. The ladder resistors 300 may have a value of, for example 100 kΩ each. The junction points of the resistors 300 are connected *via* isolating resistors 301 of, for example 1.5 MΩ to the respective selection electrodes 9, 9', 9'', ... The isolating resistors 301 prevent too much voltage of the selection pulses from being lost *via* the ladder resistors. Moreover, a limiting resistor of, for example 200-400 Ω (not shown) dependent on the desired slope of the selection pulse may be incorporated in each supply lead to a selection electrode, which resistor maintains the charge and discharge currents of the capacitive load constituted by the selection electrode within admissible limits.

The selection pulses are generated by means of a plurality of cascaded ICs 304a, 304b, ..., 304c, 304d each having a plurality of outputs which are connected to the selection electrodes 9' 9', 9'', ... *via* coupling capacitors 305 of, for example 2.5 nF. For the sake of simplicity, Fig. 4 shows ICs each having three outputs for driving the selection electrodes. However, a practical display device has a very large number of selection electrodes, for example 600 and then, for example 10 ICs each having 60 outputs can be used. As regards the power supply voltage, the ICs are cascaded, *i.e.* each of the two power supply terminals (-) and (+) of an IC is at a higher voltage level than the corresponding power supply terminal of the adjacent, lower IC in the cascade. In Fig. 4 the lower power supply voltage of IC 304a is denoted by Vs0 and the higher voltage is denoted by Vs1. The two power supply voltages of IC 304b are Vs1 and Vs2. those of IC 304c are Vs8 and Vs9 and those of IC 304d are Vs9 and Vs10.

The selection pulses are generated in a manner to be further described because an IC output is normally connected to the lower power supply voltage by means of a change-over switch in the IC and is switched to the higher power supply voltage for a period of, for example 30 µsec (for a 50 Hz non-interlaced picture with 600 selection electrodes). If the power supply voltages Vs0 ... Vs10 each time differ 300 V from each other (Vs0 = 0 V, Vs1 = 300 V, Vs2 = 600 V ... Vs8 = 2400 V, Vs9 = 2700 V, Vs10 = 3000 V) then each IC supplies selection pulses of 300 V, while the DC level increases from IC to IC. When 10 ICs are used in cascade, the first IC supplies selection pulses between 0 and 300 V, the second IC supplies selection pulses between 300 and 600 V, the third IC supplies selection pulses between 600 and 900 V and the last IC supplies selection pulses between 2.7 kV and 3.0 kV. If the total transport voltage V_{biasH} is 3 kV and the voltage V_{biasL} is 0 V, this implies that none of the coupling capacitors 305 is to process a DC voltage which is larger than 300 V.

All selection pulses which are supplied by the outputs of the ICs should be generated consecutively, for example, first at the lower output of the lower IC 304a, then at the second lower output of the lower IC, and so forth. After the upper output of the lower IC 304a, the lower output of IC 304b is to supply a selection pulse. This continues until it is ultimately the turn of the upper output of the upper IC 304d. Scanning of the selection electrodes then proceeds from bottom to top. This continues until it is of course alternatively possible and more conventional for scanning to be effected from top to bottom. The instant of generating the selection pulses is defined by a control signal which is supplied by a control circuit SS present in the selection controller to control inputs Ctrl of the respective ICs. This control signal may comprise an address for each IC output whose turn it is to supply a selection pulse. It should be noted that the control signal has a low information density because only the address of the selection electrode which is active is to be transmitted. The sequence of the selection electrodes to be activated is previously programmed in software or hardware in the IC. As is shown diagrammatically, this relatively small number of control signals is passed on from ground level to the various ICs with their distinct DC levels. To this end a DC isolation 306a ... 306d is incorporated before each Ctrl input, for example a separating transformer or a series capacitor or an optocoupler (either or not *via* a glass fibre) or a piezotransformer.

The power supply voltage divider SD preferably comprises a plurality of series-arranged zener diodes 308a, 308b ... 308d having a zener voltage of, for example, 300 V to which an external current is applied *via* the terminal Vs10. The zener diodes 308 maintain the power supply voltages Vs1 ... Vs10 at the desired value. The DC power supply current of the ICs flows from the externally connected terminal Vs10 to the terminal Vs0 *via* the respective ICs 304d, 304c ... 304b, 304a. In principle, the current through each IC is equal, but the IC supplying selection pulses temporarily draws a much larger current. The quiescent current through the zener diodes should be minimally equal to this large current because otherwise a (temporary) collapse of the power supply voltage across said IC might occur. However, since this large current flows through all zener diodes, this results in a large power dissipation.

A measure by which the power dissipation of the circuit can be reduced to a considerable extent is to arrange external decoupling capacitors across the power supply terminals of the respective integrated driver circuits. As is shown in Fig. 4, decoupling capacitors 307a ... 307d are arranged between the + and - terminals of each IC 304. Due to this measure, the cascaded ICs 304 are decoupled from each other for alternating current. The relatively large load current which flows to and from selected selection electrodes is then supplied by the decoupling capacitor connected to the relevant IC and is not subtracted from the quiescent current which flows through the relevant zener diode. The quiescent current flowing through the zener diodes 308 can thus be adjusted at a much lower level and the power dissipation is much smaller. The decoupling capacitors 307 and the zener diodes 308 constitute a power supply voltage divider SD for the IC cascade. It is to be noted that the required power supply voltages may alternatively originate from a separate floating power supply per IC (for example, generated by separate windings of a power supply transformer) which are mutually maintained at the correct voltage *via* a bleeder network.

Fig. 5 shows diagrammatically the internal circuit of the ICs 304a ... 304d. For each output the IC has a change-over switch 309, 309', 309'' ... which normally connects the relevant output to the low power supply terminal (-). The change-over switches 309, 309', 309'' ... are driven by address units 310, 310', 310'' ... to which in their turn the control signal Ctrl is applied. Each address unit responds to a unique address and when the control signal supplies the relevant address, the address unit switches the associated change-over switch so that the associated output is connected to the high power supply terminal (+). As soon as the control signal supplies a new address, said change-over switch switches back to the (-) terminal.

The embodiment of Fig. 4 has a limitation in that the bias (transport) voltage per IC and the selection pulse height in the display are coupled. The IC power supply voltage (= the voltage between the + and the - power supply terminal) corresponds to the selection pulse height in the display, supplemented with a small loss in the coupling capacitor. Thus it is necessary that the desired transport voltage per electrode in the display (for example 5 V) is equal to the selection pulse height, divided by the number of outputs per IC. However, if this is not the case, the voltage levels at which the successive ICs are operated will deviate to an increasing extent from the associated bias voltages in the display and the insulation requirements of the coupling capacitors will thus become increasingly stringent.

Said limitation is a result of the fact that the high power supply terminal (+) of an IC in the circuit of Fig. 4 is directly coupled to the low power supply terminal (-) of the IC which directly follows in the cascade. Fig. 6 shows a number of modifications in which this direct coupling and hence said limitation is avoided. In this Figure the reference numeral 304 denotes the ICs of the IC cascade and the reference LN denotes the coupling capacitors 305 and the resistance ladder RL which may comprise the elements 300 and 301 in the same way as in Fig. 4.

Fig. 6a shows the case where the transport voltage per IC (= the total transport voltage V_{biasH}-V_{biasL} divided by the number of ICs) is higher than the selection pulse height. The negative power supply terminal (-) of an IC is not connected to the same tap on the power supply voltage divider SD as the positive power supply terminal (+) of the previous IC, as in Fig. 4, but to a separate, higher tap. In other words, besides the zener diodes 308a, 308b ... which are connected between the - terminal and the + terminal of each IC, extra zener diodes 311a, 311b ... are incorporated in the power supply voltage divider SD between the + terminal of an IC and the - terminal of the next higher IC in the cascade.

If, for example the total required transport voltage is 4000 V, and if the 600 selection electrodes are to be driven by means of 10 ICs having 60 outputs each, the transport voltage per IC will be 400 V. The zener diodes 308 should have a zener voltage of 300 V because these zener diodes define the height of the selection pulse. To yield the desired 400 V potential shift per IC, the zener diodes 311 are added which, in this numerical example, should then have a 100 V zener voltage each. Of course, each 300 V zener diode 308 may be composed of the series arrangement of three 100-volt zener diodes so that a power supply voltage divider of identical 100-volt zener diodes is obtained in which each time three zener diodes are connected between the + and - terminals of one and the same IC and one zener diode is connected between the + terminal of an IC and the - terminal of the next higher IC in the cascade. If the transport voltage per IC is larger than the height of the selection pulses, an alternative, but less efficient possibility is obtained in that the number of ICs is raised (so that the transport voltage per IC will become approximately equal to the selection pulse height) and that not all outputs of the IC are used.

Fig. 6b shows the case where the transport voltage per IC is smaller (for example 200 V) than the desired selection pulse height (of, for example 300 V). Now, all the zener diodes shown have a 100-volt zener voltage. The - terminal of an IC is now connected to a tap on the power supply voltage divider which is situated between the two taps to which the + and - terminals of the IC directly preceding in the cascade are connected. For a relatively low required transport voltage an alternative is shown in Fig. 6C in which the ICs are operated in groups of two or more at the same voltage.

Also in the modifications of Fig. 6 decoupling capacitors, similar to the capacitors 307 of Fig. 4, are incorporated (not shown). For example, a decoupling capacitor is connected between the - and the + power supply terminal of each IC and a decoupling capacitor is connected between the + terminal of each IC and the - terminal of the adjacent, next higher IC.

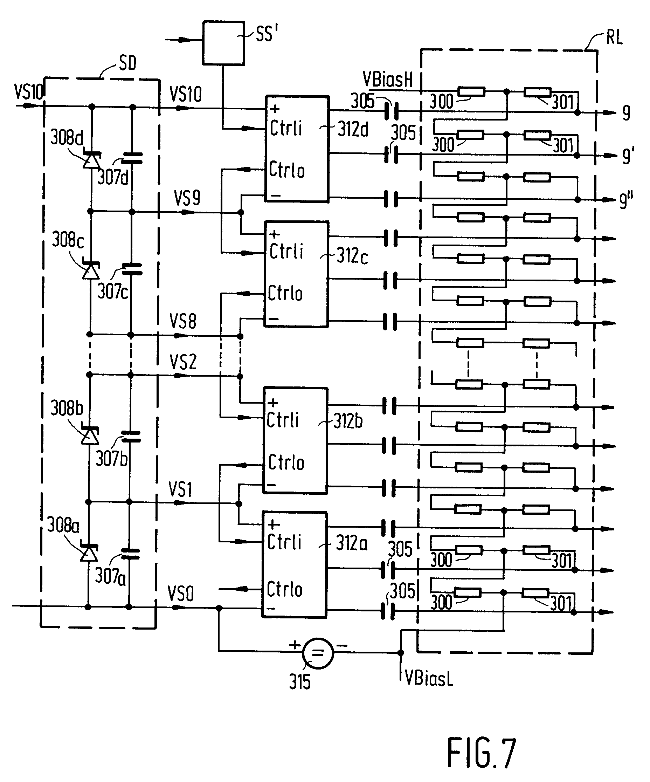

Fig. 7 shows a further embodiment in which elements corresponding to those in Fig. 4 have the same reference numerals. In this embodiment the cascaded ICs are not only cascaded as regards the power supply voltage but also as regards the control signals. To this end the embodiment of Fig. 7 comprises ICs 312a, 312b... each having both an input terminal Ctrli for the control signals and an output terminal Ctrlo. The control signals are applied in the form of a single pulse from a control circuit SS' to the Ctrli terminal of the upper IC 312d. As a result, the IC 312d generates a selection pulse of, for example 30 µs to the first (upper) output, subsequently a selection pulse to its second output, and so forth. When the last (lower) output of IC 312d has generated (or generates) a selection pulse of 30 µs, a pulse is applied to the Ctrli input of the IC 312c *via* the output Ctrlo. Here, the process described above is repeated until all outputs of all ICs have supplied a selection pulse. It is to be noted that, since the ICs operate at different DC levels, the transmission of the control signals between the ICs should be accompanied by a suitable DC offset. This can be effected by known level shifting means such as, for example coupling capacitors or semiconductor elements which are arranged either externally between the Ctrlo terminal of an IC and the Ctrli terminal of the adjacent IC, or internally integrated in the ICs.

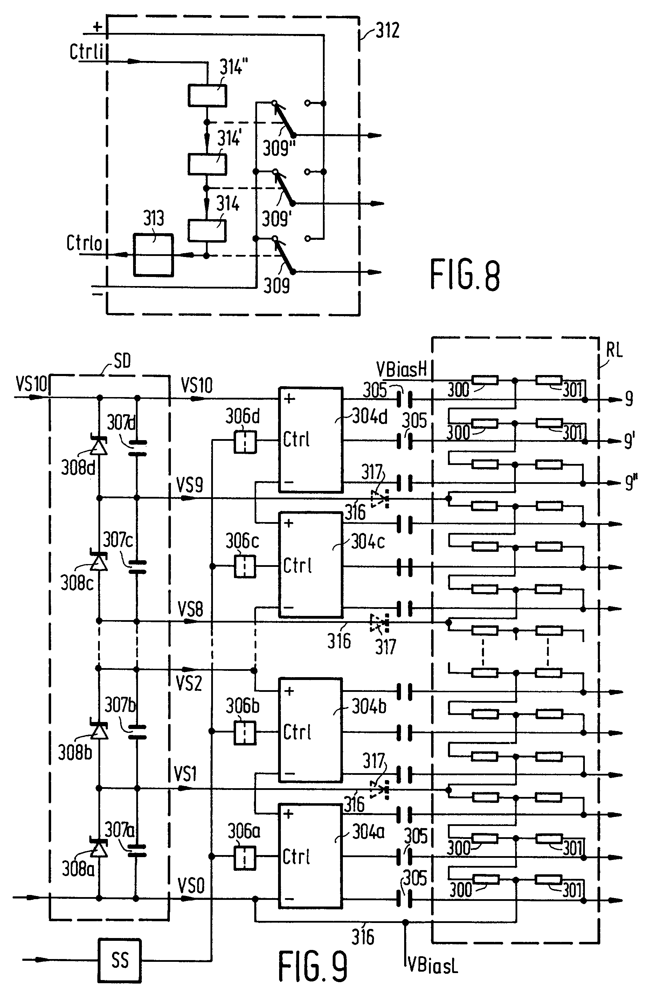

Fig. 8 shows diagrammatically an embodiment of an internal circuit of the ICs 312 in which elements corresponding to those in Fig. 5 have the same references. The control pulse which is applied to the terminal Ctrli is subsequently applied to a cascade of delay elements 314'', 314', 314 which jointly operate as a shift register and successively apply switching pulses to the switches 309'', 309', 309. Simultaneously with a change-over of the last switch, a control pulse is applied to the Ctrlo output *via* a level shifter 313 for transfer of this pulse to the Ctrli input of the next IC. The level shifter 313 comprises, for example a current source which supplies the control signal in the form of current pulses to the next IC. The transmission of the control signals *via* the delay elements 314 and the level shifter 313 is preferably realised under the control of clock pulses. In a manner not shown, these clock pulses may be transferred in cascade from one IC to the other, while a level shift is effected for each IC again. No delay elements are provided for the clock pulse transfer so that all ICs receive the clock pulses (substantially) simultaneously.

It is to be noted that Figs. 7 and 8 are based on the assumption that the electron transport in the display unit takes place from bottom to top and that the row selection (the row scanning) takes place from top to bottom. Electron transport and row scanning thus have opposite directions. If both have the same direction, *i.e.* if the electron transport and also the row scanning take place, for example from bottom to top, the Ctrli and Ctrlo terminals are to be exchanged in the circuit of Fig. 8.

The coupling capacitors 305 preferably have a high CV product per unit volume. However, such capacitors have a certain degree of voltage dependence in the sense that their capacitance decreases with an increase of the voltage present across the capacitor. Together with the load capacitance constituted by the selection electrode 9, 9', 9'' ..., this results in a attenuation of the selection pulse which is dependent on the DC voltage across the coupling capacitor. However, this DC voltage is not the same for the different coupling capacitors, but varies in a sawtooth-shaped manner as a function of the selection electrode ordinal number. If the numerical example shown in Fig. 4 is used, there will be a 0-volt DC voltage across the coupling capacitor at the lower output of IC 304a. The DC voltage across the other coupling capacitors connected to IC 304a increases by 5 V per electrode and the DC voltage across the upper coupling capacitor connected to IC 304a will then be 295 V. This situation is repeated for the subsequent ICs with 0 V across the coupling capacitor of the lower output, increasing by 5 V per coupling capacitor to 295 V across the coupling capacitor of the upper output.

Due to the above-mentioned DC voltage-dependent attenuation of the selection pulses, this sawtooth-shaped variation is found back in the heights of the selection pulses and hence in the deflection efficiency of the electron currents in the respective compartments 6. This may result in a disturbing row-shaped brightness structure in the displayed image, while particularly the DC voltage jump (occurring 9 x in 10 ICs) from 295 V to 0 V at the interface between two ICs appears to be very disturbing. The disturbance can be reduced by raising the selection pulse voltage or by increasing the capacitance of the coupling capacitors, but both measures have their drawbacks.

To reduce the above-mentioned effect to a considerable extent, the DC level of the power supply voltages (Vs0 ... Vs10) of the ICs is raised in such a way with respect to the DC level of the bias (transport) voltages that each IC operates at approximately the (-) power supply voltage level which corresponds to the bias voltage halfway the lowest and highest bias voltage associated with the relevant IC. This is realised in Fig. 7 by means of the DC source 315 which is arranged between the terminal, denoted by Vs0, of the power supply voltage divider SD and the terminal of the resistance ladder RL denoted by V_{biasL}. If, by way of example, the voltage values shown in Fig. 4 are maintained, the DC source 315 should have a value of 147.5 V in the ideal case. The DC voltage across the coupling capacitors 305 then has a sawtooth variation from -147.5 V across the coupling capacitor at the lower output of IC 304a to + 147.5 V across the coupling capacitor at the upper output of IC 304a, subsequently again from -147.5 V across the coupling capacitor at the lower output of IC 304b to + 147.5 V across the coupling capacitor at the upper output of IC 304b, and so forth. It is true that there is still a voltage jump of 295 V between the coupling capacitor at the upper output of an IC and the coupling capacitor at the lower output of the next IC, but a voltage jump no longer occurs in the absolute value of these voltages and it is this absolute value which defines the capacitance of the coupling capacitors. An additional advantage of the DC offset with the aid of the source 315 is that the coupling capacitors in this (ideal) case need only bridge an insulation voltage of half the bias voltage per IC, *i.e.* half the product of the required transport voltage per electrode and the number of (active) outputs minus 1 per IC.

The DC source 315 may be realised, for example by means of a resistor having a suitable resistance and being shunted by a smoothing capacitor. If in Fig. 7 the terminal V_{biasL} is connected to ground level (0 V), the DC source 315 raises the IC power supply voltages by its voltage value. If instead of the terminal V_{biasL} the terminal Vs0 is grounded, the DC source 315 lowers the bias voltages by the same value.

A problem still requiring attention is that of the tolerances of the ladder resistors 300. Let it be assumed that these resistors have a tolerance of ± 2%. When designing the circuit, the worst case distribution of these tolerances should be taken into account and occurs when all the resistors in the upper half of the ladder are at their upper tolerance limit and all the resistors in the lower half are at their lower limit (or *vice versa*). Halfway the ladder RL, this results in a deviation of 2%, *i.e.* in a 3 kV ladder a voltage of 1.5 kV ± 30 V. To ensure that the selection electrodes connected halfway the resistance ladder do not extract electrons from the compartments 6 in their "off" state and because these selection electrodes may convey too much bias voltage due to said tolerances of 30 V, the nominal bias voltage should be adjusted 30 V lower. On the other hand, this bias voltage may be additionally decreased by 30 V due to the tolerances. As a result, the selection pulse should be 60 V higher, *i.e.* instead of 300 V it should be 360 V so as to extract all (or substantially all) electrons from the compartments 6 in the "on" state. Such a 20% increase of the selection pulse is accompanied by a 44% higher power dissipation when generating the selection pulses.

The embodiment of Fig. 9, which is identical to that of Fig. 4, obviates this drawback. To this end junction points of the power supply voltage divider SD and junction points of the resistance ladder RL having a mutually corresponding nominal DC voltage are interconnected *via* DC connections 316. As has been described by way of example with reference to Fig. 4, the power supply voltages Vs0, Vs1, Vs2 ... Vs10 have values of 0 V, 300 V, 600 V ... 3000 V, respectively, while the low bias voltage V_{biasL} is 0 V and the bias voltage nominally increases by 300 V per IC. The connections 316 in Fig. 9 are thus arranged between points of equal nominal voltage. Deviations of the nominal value caused by the components tolerances in the resistance ladder are therefore fixed at the desired value at the points where the connections 316 are connected, while also the bias voltage of the intermediate points deviates from the desired nominal value to a much lesser extent. If, as described with reference to Fig. 7 by means of the DC source 315, the bias voltages of the resistance ladder RL are shifted with respect to the power supply voltages, the junction points for the connections 316 should of course also be adapted. For example, the - power supply terminal of each IC is then connected to the point of the resistance ladder which supplies the bias voltage for the middle selection electrode connected to the relevant IC.

The connections 316 may incorporate diodes 317 (shown in broken lines). If during operation one of the ICs 304 supplies its series of selection pulses and hence causes a temporarily large load with the accompanying voltage drop in the power supply voltage divider SD, the relevant diode 317 is blocked so that the voltage drop is not passed on to the resistance ladder RL. If zener diodes are used instead of the diodes 317, the connection to the resistance ladder should have a nominal voltage which is offset with the zener voltage with respect to the voltage of the junction point of the power supply voltage divider. Thus, the connections 316 are not necessarily connected between junction points having a mutually equal nominal potential.

## Claims

1. A picture display device having a selection structure for controlling the passage of electrons *via* extraction locations (8) which communicate row by row with electron transport ducts (6) and with selection electrodes (9) associated with the extraction locations, which selection electrodes are coupled to a selection driver (D1) comprising a resistance ladder (RL) for applying, to the selection electrodes, a bias voltage increasing with the position across the length of the transport ducts, and coupling capacitors (305) for applying selection pulses to the selection electrodes, characterized in that the selection driver comprises a multiple of integrated driver circuits (304) for supplying the selection pulses, each integrated driver circuit having a plurality of outputs each supplying selection pulses *via* one of the coupling capacitors (305), said integrated driver circuits being cascaded as regards their power supply voltages (Vs0 ... Vs10) originating from a power supply voltage divider (SD).

2. A picture display device as claimed in Claim 1, characterized in that each integrated driver circuit (304) has a first power supply terminal (-) for connection to a first power supply voltage of the power supply voltage divider (SD) and a second power supply terminal (+) for connection to a second power supply voltage originating from the power supply voltage divider (SD) being larger than the first power supply voltage, and in that the first power supply voltage for an integrated driver circuit located at a lower position in the cascade is smaller than the first power supply voltage for the integrated driver circuit which is next higher in the cascade.

3. A picture display device as claimed in Claim 2, characterized in that the voltage difference between the first power supply voltage of an integrated driver circuit located at a lower position in the cascade and the first power supply voltage of the integrated driver circuit which is next higher in the cascade is substantially equal to the bias voltage (V_{biasH}-V_{biasL}) across the total resistance ladder, divided by the number of cascaded integrated driver circuits.

4. A picture display device as claimed in Claim 2 or 3, characterized in that said power supply terminals of the integrated driver circuits are decoupled for alternating current by means of decoupling capacitors (307).

5. A picture display device as claimed in Claim 2 or 3, characterized in that the power supply voltages of the integrated driver circuits are adjusted in such a way (315) with respect to the bias voltages generated by the resistance ladder (RL) that the first power supply voltage of the integrated driver circuits is substantially halfway between the lowest and the highest bias voltage of the selection electrodes driven by the relevant driver circuit.

6. A picture display device as claimed in Claim 1, characterized by DC connections (316) which interconnect junction points of the power supply voltage divider (SD) and junction points of the resistance ladder (RL) which have a mutually corresponding nominal DC voltage.

7. A picture display device as claimed in Claim 1, characterized in that the integrated driver circuits have a control signal input (Ctrli) for supplying control signals which control the instant of occurrence of the selection pulses at the outputs of the integrated driver circuit.

8. A picture display device as claimed in Claim 7, characterized in that the integrated driver circuits (312) are also cascaded as regards the control signals and have control signal outputs for supplying delayed and DC-offset control signals to the control signal input of an integrated driver circuit which is next in the cascade.

9. A selection driver for use in a picture display device as claimed in Claim 1, comprising a power supply voltage divider (SD) to which integrated driver circuits (304) which are cascaded as regards their power supply voltage are connected.

10. An integrated driver circuit for use in a picture display device as claimed in Claim 1, comprising switching means (309) for generating selection pulses and an input terminal (Ctrli) for supplying control signals controlling the switching means.
